# EUROPEAN PATENT APPLICATION

(11) **EP 4 741 060 A1**
(43) Date of publication of application: **13.05.2026**
(21) Application number: 25213698.1
(22) Date of filing: 05.11.2025
(51) Int. Cl.: B02C 18/16, B02C 18/24, B02C 21/02, B02C 18/14, A01G 23/06

(54) **SELF-PROPELLED SHREDDER DEVICE**

(30) Priority: 06.11.2024 IT 202400024945
(71) Applicant: Agrinova S.r.l., 35010 Curtarolo (PD) (IT)
(72) Inventor: Becchiati, Manuel, 45014 Porto Viro (RO) (IT)
(74) Representative: De Bortoli, Tiziano

(57) **Abstract**

The present invention relates to a self-propelled shredder device (1) for shredding dry or wet green waste material, including leaves, woody branches, palm tree prunings, olive tree prunings, bamboo prunings and others. The device (1) comprises a frame (10) supporting a plurality of rotating movement members (8A, 8B) whose rotation causes the advancement on the ground of said device (1). The device (1) further comprises drive means (16A, 16B) connected to said rotating members (8A, 8B) to rotate them. The device includes a shredding chamber (15) in which shredding means (30) of the waste material are housed. This chamber communicates with a loading hopper (13) for loading the material to be shredded and with a discharge conduit (14) for discharging the material. The device is provided with a thermal engine (MT) supported by said frame (10) and mechanically connected to said shredding means (30) for driving them and shredding the material. According to the invention, the drive means (16A, 16B) which cause the advancement on the ground are of an electrical type.

## Description

### TECHNICAL FIELD

The present invention falls within the scope of the creation of devices and apparatuses for the transformation of green waste materials, such as shrubs, branches or other semi-woody waste. In particular, the present invention relates to a self-propelled shredder device capable of shredding dry or wet green waste, including leaves, woody branches, palm tree prunings, olive tree prunings, bamboo prunings and others.

### STATE OF THE ART

The use of shredders *(also called chippers or bio-shredders)* to shred green waste of various types and consistencies, such as shrubs, leaves, twigs and more, is widely known. Shredders are typically used in forestry, agriculture or simply for gardening. In their basic configuration, shredders comprise a support structure supporting a shredding chamber in which a drum is arranged, equipped with knives useful for shredding the green material. The shredding chamber, at an inlet section thereof, communicates with a loading hopper fed with the material to be shredded. In some cases, a feeder drum is installed at the bottom of the loading hopper *(i.e., in a position adjacent to said inlet section)* which conveys the material to be shredded into the shredding chamber in an orderly manner. The shredding chamber is also connected to a discharge mouth into which the shredded material is conveyed to allow a guided discharge thereof into the external environment. Typically, the frame of the shredder device also supports a thermal engine mechanically connected to the shredding drum via a belt transmission. Therefore, the mechanical torque needed to shred the green material is supplied by the thermal engine to the shredding drum. When present, the feeding drum is instead driven via a hydraulic engine whose operation is enabled by a pump. This is driven directly by the same thermal engine used to rotate the shredding drum. In some cases, an electric engine is installed instead of the thermal engine to cause the rotation of the shredding drum.

Among the various types available on the market, there is the self-propelled shredder, which comprises movement members *(typically wheels or tracked units)* through which the shredder rests on the ground. Some of these members are motorized so as to move the shredder on the ground. In some cases, the advancement of the shredder is caused by means of a mechanical transmission that directly connects the thermal engine to at least one pair of movement members keyed onto the same shaft. More frequently, two hydraulic engines are provided, each to cause the rotation of a corresponding wheel or corresponding tracked unit, where the hydraulic engines are powered by a pump. The latter, in turn, is driven by the same thermal engine used to drive the shredding drum. More precisely, a mechanical transmission is provided which operationally connects the shaft of the thermal engine to the shaft of said pump.

The Applicant has noted that the self-propelled shredder devices on the market are disadvantageous, especially in terms of environmental impact. In particular, there is a need to improve the movement of the device on the ground, which is currently implemented in an inefficient manner and at the same time has a strong environmental impact. In this regard, the use of hydraulic drives is always accompanied by the risk of environmental contamination which can occur with the loss of part of the oil used in the circuits. The need is therefore felt for new and innovative solutions that allow reducing overall energy consumption.

### SUMMARY

Based on the above considerations, the main task of the present invention is to provide a self-propelled shredder device that allows the above-mentioned disadvantages to be overcome or at least mitigated.

Within the scope of this task, a first object of the present invention is to provide a self-propelled shredder device that is effective and has less environmental impact with respect to traditional shredder devices.

Yet another object of the present invention, related to the previous one, is to provide a shredder device that allows limiting energy consumption, especially that related to carbon dioxide emissions.

Not least, an object of the present invention is to provide a shredder device that is reliable and easy to manufacture at competitive costs.

The Applicant has found that the tasks and objects described above can be achieved through a *hybrid* drive of the shredder device which provides a thermal engine to drive the shredding means and electric drive means *(i.e., one or more electric engines)* to drive the movement members *(wheels or tracked units),* i.e., to determine the advancement on the ground of the device. In particular, said electric drive means can be electrically powered through a battery module and/or through the electrical energy generated by an alternator mechanically connected to the thermal engine.

In particular, the Applicant has found that the intended task and objects can be achieved via a self-propelled shredder device for shredding green waste material as in Claim 1. In particular, the shredder device according to the invention comprises:
- a frame supporting a plurality of rotating movement members, wherein said rotating members, as a result of their rotation, cause the advancement on the ground of the device;
- drive means connected to the rotating members to rotate the rotating members themselves and therefore cause said advancement of the device;
- a shredding chamber in which shredding means of said waste material are housed;
- a loading hopper for loading waste material to be shredded and a discharge conduit for discharging shredded waste material, wherein said loading hopper and said discharge conduit are in communication with said shredding chamber;
- a thermal engine supported by the frame and mechanically connected to the shredding means for driving them.

The device according to the invention is characterized in that said drive means are of an electrical type, i.e., they comprise at least one electric engine.

In accordance with a possible embodiment, the device according to the invention comprises feed means for conveying the waste material into the shredding chamber and a drive module for driving such feed means. According to the invention, said drive module is also of an electrical type. Even more preferably, the drive module is powered by the same power supply line provided to power the drive means of the movement members.

In accordance with an embodiment, the device according to the invention comprises a battery module including one or more power batteries, wherein this battery module is electrically connected to a power supply line of the drive means.

In accordance with a possible embodiment, the device according to the invention further comprises an electric alternator which includes a rotor and a stator, wherein said rotor is mechanically connected to the thermal engine and wherein the stator is electrically connected to the power supply line provided to power said drive means.

Preferably, the battery module and the alternator stator are connected in parallel to said power supply line, i.e., in such a way as to power said drive means of said movement members in parallel.

In accordance with a preferred embodiment, the drive means comprise two tracked units, each comprising a drive wheel; said drive means comprise a pair of electric engines, each of which is connected to a drive wheel of one of said tracked units.

In accordance with a preferred embodiment, the frame comprises a main plate above which said thermal engine is installed, where the battery module is installed below said main plate in a position at least partially below the thermal engine.

In accordance with a preferred embodiment, the frame comprises a pair of opposing and spaced apart support sidewalls emerging above with respect to the main plate, wherein the shredding chamber is installed and supported between the support sidewalls in a position close to the thermal engine.

In accordance with a preferred embodiment, the shredding chamber comprises an inlet section and an outlet section respectively communicating with the loading hopper and with the discharge conduit, wherein the shredding means comprise a shredding rotor supporting one or more cutting elements and arranged within the shredding chamber in a position close to the inlet section, said feed means comprising a vane rotor arranged outside said shredding chamber in a position close to the inlet section. In particular, the rotation axis of the vane rotor is parallel to the rotation axis of the shredding rotor.

In accordance with an embodiment, the shredding rotor is connected to the output shaft of the thermal engine through a mechanical belt transmission which includes:
- an intermediate shaft whose rotation axis is parallel to the rotation axis of the shredding rotor of the shredding means and to the rotation axis of the output shaft of the thermal engine;
- a first belt to transmit motion from the thermal engine to the intermediate shaft, and
- a second belt to transmit motion from the intermediate shaft to the shredding rotor of the shredding means.

In particular, the first belt and the second belt are arranged on opposite sides of the frame.

In accordance with a preferred embodiment, the rotor is mechanically connected to, preferably keyed onto, said intermediate shaft of the mechanical transmission.

In accordance with an embodiment, the shredding chamber is transversely delimited by two opposing and spaced apart structural plates, where the shredding rotor, the vane rotor and/or the intermediate shaft are supported between facing portions of said structural plates.

### LIST OF FIGURES

Further features and advantages of the present invention will become clearer from the description of preferred, but not exclusive, embodiments of a shredder device according to the invention, illustrated by way of example in the attached drawings, in which:
- Figures 1 and 2 are perspective views from different observation points of a self-propelled shredder device according to the invention;
- Figures 3 and 4 are side views of the device in Figures 1 and 2 with some external parts removed;
- Figure 5 is an exploded view of the device of Figures 3 and 4;
- Figure 6 is a longitudinal sectional view of the device of Figures 3 and 4;
- Figure 7 is a further view of the device of Figures 1 and 2 in an inspection configuration of the device itself;
- Figure 8 is a scheme of the electrical operation of a shredder device according to the invention.

The same reference numbers and letters in the figures identify the same elements or components.

### DETAILED DESCRIPTION

With reference to the aforementioned figures, the shredder device 1 according to the invention can be used to shred various types of green waste material, for example shrubs, leaves, twigs, waste from pruning vines, palm trees, olive trees, bamboo or other. The shredder device 1 *(hereinafter also referred to as device 1)* can be used in forestry, agriculture or gardening. The device 1 is self-propelled, i.e., configured to move autonomously without being towed manually or by another vehicle.

The device 1 comprises a frame 10 supporting rotating members 8A, 8B for moving the device, where such rotating members 8A, 8B are preferably, but not exclusively, in the form of wheels or tracked units. The device 1 comprises drive means 16A, 16B operatively connected to at least one, preferably to at least two, of said rotating members 8A, 8B so as to cause the advancement on the ground of the shredder device 1.

The device 1 further comprises a shredding chamber 15 *(hereinafter also referred to as chamber 15)* , supported by the frame 10, within which shredding means 30 are installed to shred/crush the green material. The frame 10 also supports a loading hopper 13 and a discharge conduit 14 in communication with the chamber 15. The green material to be shredded is introduced into the chamber 15 via the loading hopper 13. Instead, the shredded plant material is conveyed into the discharge conduit 14 to be expelled in an orderly fashion into the external environment.

The device 1 according to the invention comprises a thermal engine MT supported by the frame 10. The thermal engine MT *(hereinafter also referred to only as the engine MT)* is mechanically connected to the shredding means 30 to drive them. As visible in the figures, preferably, the engine MT is connected to the shredding means 30 via a mechanical transmission 35, preferably of the belt type.

According to the present invention, the drive means 16A, 16B of the rotating members 8A, 8B are of an electrical type, i.e., they comprise one or more electric engines. Therefore, as a whole, the shredder device 1 according to the invention has an advantageously *hybrid* configuration defined by a mechanical drive part *(comprising the thermal engine MT)* and an electrical drive part *(comprising the drive means 16A, 16B).* This configuration minimizes the environmental impact and consumption related to the movement of the device on the ground 1.

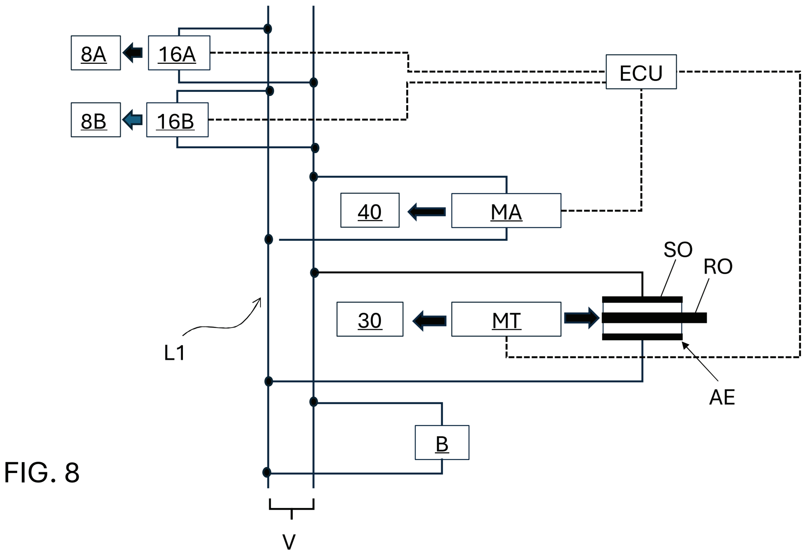

In an embodiment thereof, the device 1 comprises a battery module B *(comprising one or more electric batteries, preferably lithium)* electrically connected to the drive means 16A, 16B to power them. In particular, a power supply line *(L1 in* *Figure 8**)* is provided which supplies the drive means 16A, 16B at a pre-established voltage V *(for example 48 Volts).* As visible in the scheme in Figure 8, the battery module B is therefore electrically connected to the power supply line L1 to power the electric engines of the drive means 16A, 16B. Advantageously, the latter allow the device 1 to be moved on the ground effectively and silently. In this regard, during this movement, the thermal engine MT can also be usefully switched off to avoid, in addition to noise, emissions into the atmosphere, at least in this phase of movement. The use of electric drive units 16A and 16B also overcomes the critical issues of the hydraulic drives normally used, especially with regard to environmental impact and possible contamination.

In accordance with a preferred embodiment, the device 1 comprises an electric alternator AE comprising a rotor RO mechanically driven by the thermal engine MT. The alternator AE further comprises a stator SO whose windings are electrically connected to the power supply line L1 of the drive means 16A, 16B, as schematically shown in Figure 8. In this embodiment, the mechanical energy generated by the thermal engine MT can also be converted into electrical energy useful for powering the drive means 16A, 16B.

The alternator AE can be provided as the sole electrical feed means of the drive means 16A, 16B. Preferably, however, the alternator AE is provided in combination with the battery module B as visible in the scheme in Figure 8. In particular, the alternator AE and the battery module B are both connected to the same power supply line L1 to power the drive means 16A, 16B in parallel at the same preset voltage V.

This solution allows different operating modes. When the thermal engine is switched off *(i.e., when the alternator AE is stopped),* the drive means 16A, 16B can be powered via the battery module B. When, instead, the batteries of the battery module B are discharged *(i.e., when the voltage level is below the preset value),* the drive means 16A, 16B can be powered via the alternator AE, i.e., following the ignition of the thermal engine MT. Furthermore, when the device 1 is stopped and the thermal engine MT is activated to provide mechanical torque to the shredding means 30, then the electrical energy supplied by the alternator AE allows advantageously charging the batteries of the battery module B.

In accordance with a preferred embodiment, the device 1 comprises feed means 40 arranged outside the chamber 15 in a position close to an inlet section 15A of the chamber itself. The feed means 40 have the function of conveying the green material in an orderly manner into the chamber 15 to facilitate and optimize the shredding itself. Preferably, the feed means 40 are driven by an electric type drive module MA, i.e., via an electric engine.

With reference to the scheme in Figure 8, this drive module MA is also electrically connected to the power supply line L1, i.e., to the battery module B and/or to the alternator AE. Preferably, the drive module MA of the feed means 40 is also supplied in parallel by means of two different voltage sources *(battery module B and alternator AE),* in a similar manner to that envisaged for the drive means 16A, 16B.

Still with reference to the scheme in Figure 8, the shredder device 1 comprises a control unit *(indicated by ECU)* electrically connected to the drive means 16A, 16B, to the drive module MA of the feed means 40 and to the thermal engine MT. The control unit ECU is responsible for controlling and commanding the electric engines of the drive 16A, 16B and the drive module MA. At the same time, the control unit *(ECU)* also manages the operation of the thermal engine MT. In a possible embodiment, the control unit ECU may also be connected to the battery module B to detect the charge status and in general the operation of the batteries of the battery module B. The latter could comprise an autonomous control module, possibly also connected to the control unit ECU.

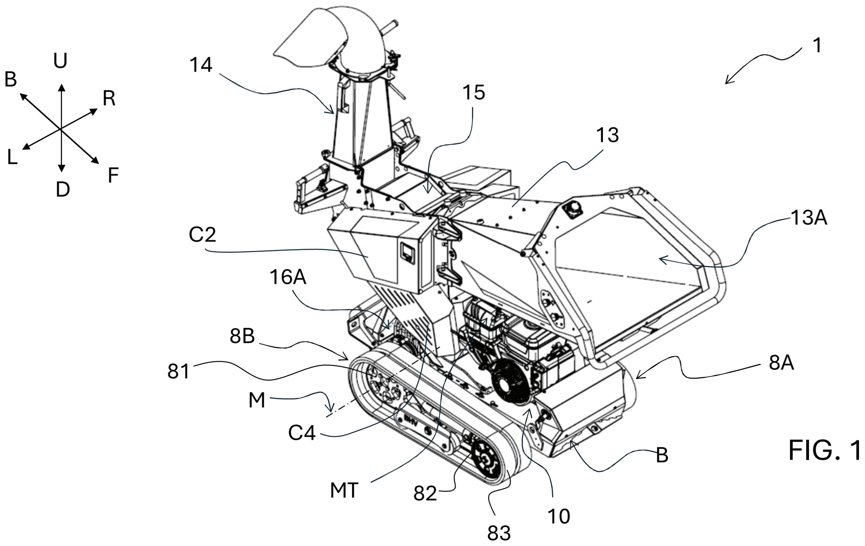

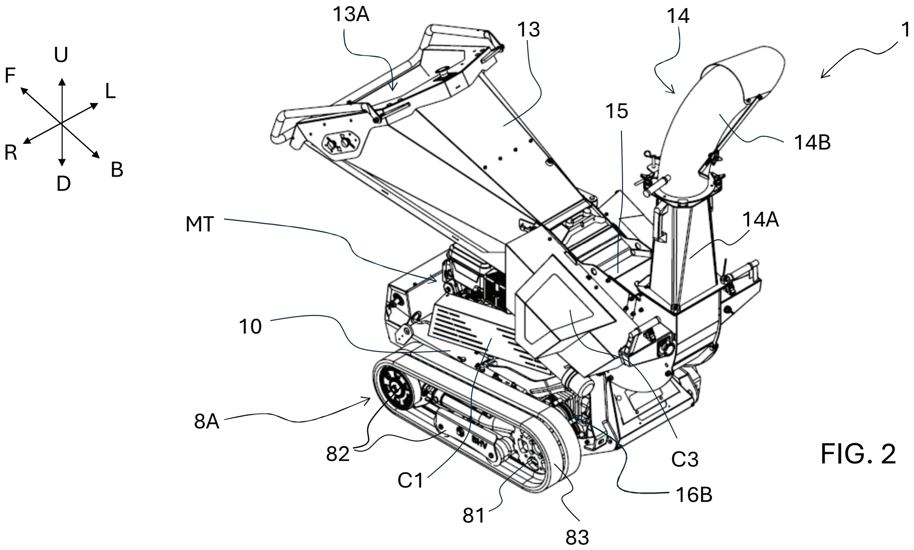

Figures 1 to 7 show a possible embodiment of the device 1. For the purposes of the present invention, hereinafter the expression *"longitudinal direction"* or *"front-back direction "* means a direction parallel to the advancement direction of the device 1 and orthogonal to the rotation axis M *(indicated in* *Figure 1**)* of the drive wheels *(indicated with the reference 81)* of the rotating members 8A, 8B, while the expression *"transverse direction"* or *"right-left direction "* means a direction substantially orthogonal to the longitudinal direction and parallel to said rotation axis M. Finally, the expression *"normal direction"* or *"up-down direction"* means a direction orthogonal to the longitudinal direction L and to the transverse direction. Figures 1 to 7 comprise reference Cartesian axes indicating the front-back direction F-B, the up-down direction U-D and the right-left direction R-L defined above. Therefore, the terms *"longitudinally or longitudinal",* the terms *"transversely or transverse"* and the terms *"normally or normal"* refer respectively to the longitudinal direction *(i.e., front-back FB),* to the transverse direction *(i.e., right-left RL)* and to the normal direction N *(i.e., up-down UD).* The terms *"front"*, *"to the right"* and *"up"* refer to the directions indicated by the arrows of the rays F, R, U visible in the figures. The terms *"behind", "to the left"* and *"down* " instead indicate the directions indicated by the arrows of the rays B, L and D. The reference PO, shown in some figures, indicates the plane on which the rotating members 8A, 8B rest, i.e., on which the shredder device 1 rests.

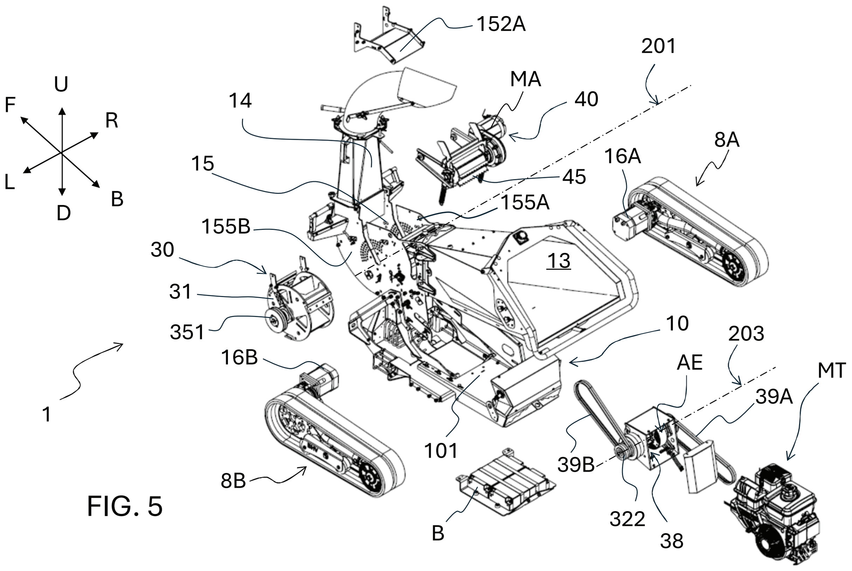

According to a preferred embodiment, the rotating members 8A, 8B comprise two tracked units *(indicated by the references 8A, 8B).* The term *"tracked unit" refers* to the assembly formed by a drive wheel 81, one or more support wheels 82 and a track 83 extending around such wheels 81, 82 and which is moved by the rotation of the drive wheel 81 *(see exploded view of* *Figure* 5). The drive means 16A, 16B comprise a pair of electric engines *(indicated with the same references 16A, 16B)* each connected to the drive wheel 81 of one of the two tracked units 8A, 8B. Preferably, each electric engine 16A, 16B is keyed onto the hub of the relative drive wheel 81.

As visible in the figures, preferably, the two tracked units 8A, 8B are installed on opposing sides of the frame 10, i.e., spaced transversely so that one is to the right and one is to the left of the frame 10. In the illustrated embodiment, the frame 10 comprises a front plate *101 (or main plate 101)* on top of which the thermal engine MT is installed. The battery module B is installed below the front plate 101, so that it is in a position at least partially below the thermal engine MT. The battery module B is preferably installed in a removable manner. Preferably, such a battery module B comprises one or more batteries, preferably lithium.

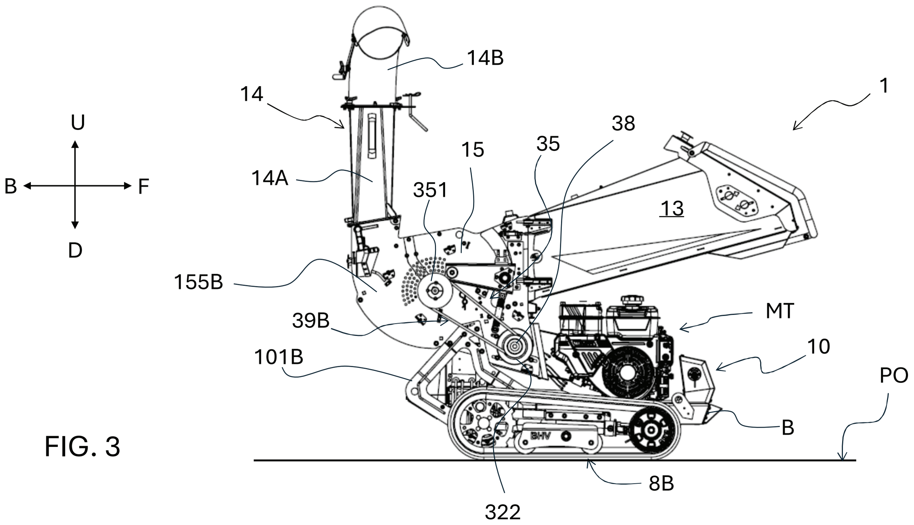

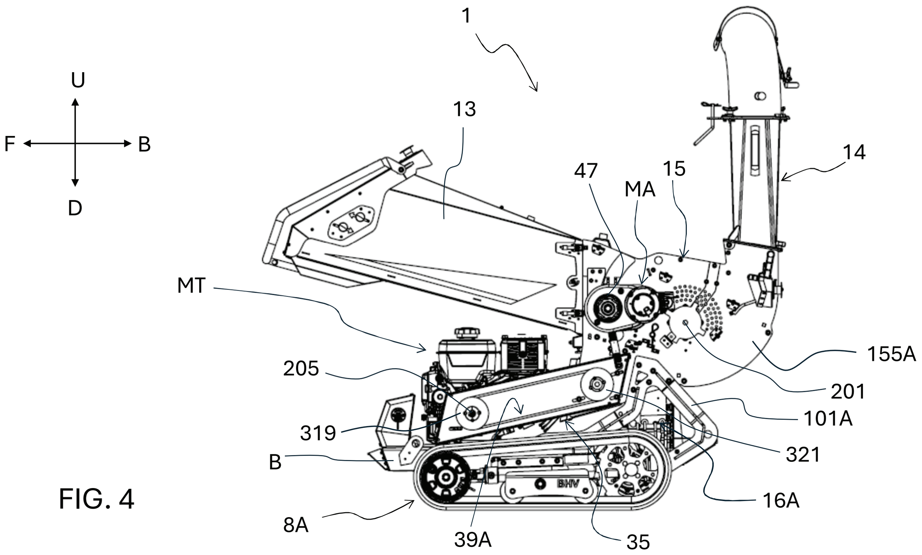

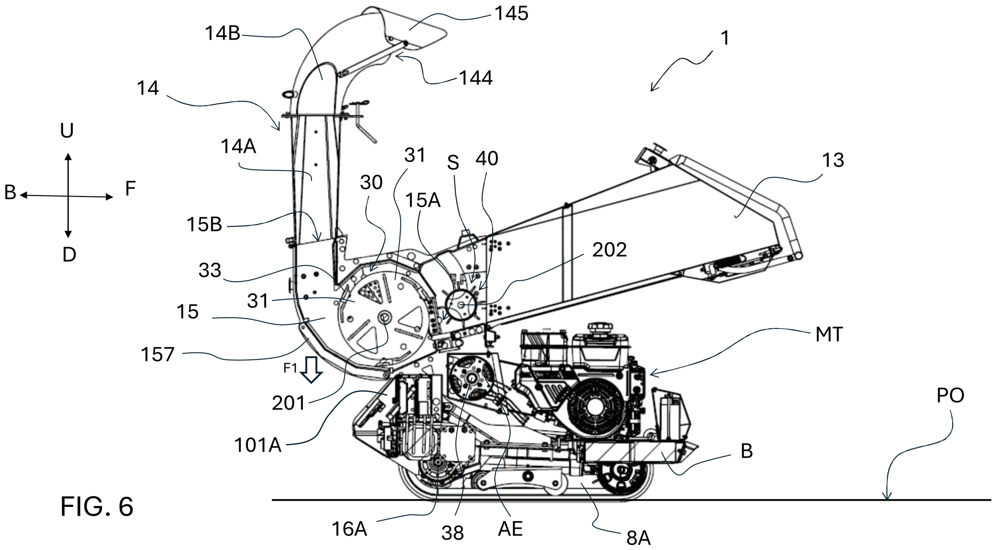

Behind, the frame 10 comprises two transversely spaced support sidewalls 101A, 101B *(indicated in* *Figures 3* *and* *4**)* emerging upwards in a normal direction with respect to the front plate 101. The shredding chamber 15 *(hereinafter also referred to as chamber 15)* is installed between, and supported by, said support sidewalls 101A, 101B of the frame 10. Therefore, the shredding chamber 15 is installed behind on the frame 10, as can also be easily observed from the longitudinal section view of Figure 6.

As shown in Figure 6, the chamber 15 has a volute shape in which an inlet section 15A and an outlet section 15B are identified. The chamber 15 is delimited by two transversely spaced structural plates 155A, 155B. The volute shape is obtained through structural components 152A, 157 *(indicated in* *Figures 5* *and* *6**)* arranged between the two structural plates 155A, 155B and suitably shaped so as to define the volute shape. Each of the two structural plates 155A, 155B is connected to one of the support sidewalls 101A, 101B of the frame 10. A right structural plate 155A is connected to the right support sidewall 101A, while a left structural plate 155B is connected to a left support sidewall 101B. The shredding means 30 comprise a shredding rotor 31 *(or shredding drum 31)* comprising a plurality of cutting elements *(or knives)* 33 which shred the green material following the rotation of the rotor itself.

More precisely, the rotor 31 is connected to the thermal engine MT via a mechanical transmission 35, a preferred embodiment of which is described below. However, this transmission comprises at least one transmission member 351 connected to the rotor 31 in a position outside the chamber 15. With reference to Figure 3, in the embodiment illustrated, the transmission member 351 emerges on the left side of the chamber 15 adjacent to the left structural plate 155B.

The feed means 40 comprising a vane rotor 45 are installed outside the shredding chamber 15, adjacent to the inlet section 15A. With reference to Figure 6, the rotation axis 202 of the vane rotor 45 is preferably parallel to the rotation axis 201 of the rotor 31 of the shredding means 30. The vane rotor 45 is also supported, at its ends, between opposing portions of the structural plates 155A, 155B, wherein such opposing portions define a passage space S *(indicated in* *Figure 6**)* for the green material in communication with the loading hopper 13.

The vane rotor 45 is mechanically connected to the drive module MA *(indicated for example in* *Figure 4**)* of the feed means 40, wherein such a module is installed on the outer side of one of the structural plates 155A, 155B, more precisely on the right structural plate 155A, in the embodiment illustrated. The drive module MA comprises an electric engine connected to the vane rotor 45 via a reduction gear 47 to increase the mechanical torque available to the vane rotor 45 itself. In accordance with what has already been indicated above, the drive module MA is electrically connected to a power supply line of the shredder device 1 fed by the alternator AE and the thermal engine MT.

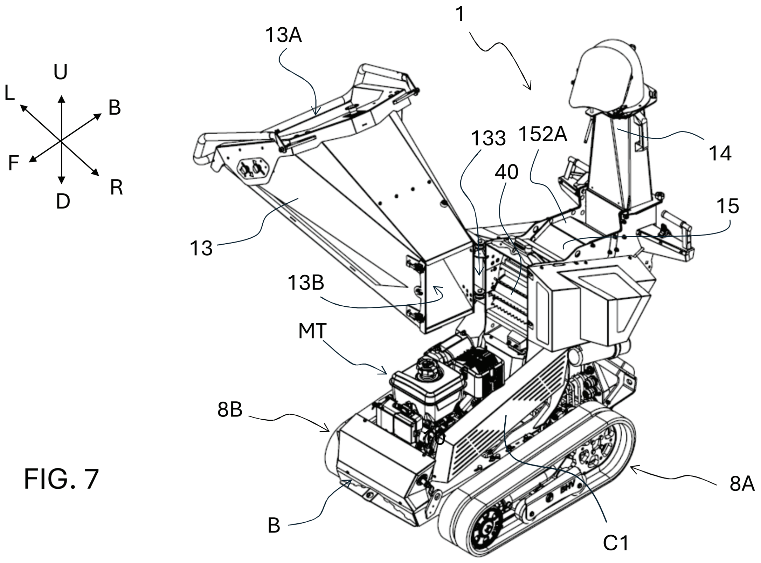

The loading hopper 13 is supported by at least one of the structural plates 155A, 155B. As shown in Figure 7, preferably, the loading hopper 13 is connected to one of the two structural plates 155A, 155B through hinge means 133 which allow the hopper itself to rotate between at least one use position and at least one inspection position. In the use position, visible in Figures 1 to 6, the loading hopper 13 extends longitudinally above the thermal engine MT towards the front part of the frame 10. In particular, in the use position, the loading hopper 13 extends inclined upwards so that its loading mouth 13A, into which the green material is inserted, is at a higher height than the bottom mouth 13B *(indicated in* *Figure* 7) which is in communication with the passage space S in which the feed means 40 are arranged. In the inspection position, the loading hopper 13 is rotated with respect to the longitudinal direction *(FB),* resulting for example arranged transversely on one side of the frame 10 *(for example on the left side as shown in* *Figure* 7). This position allows access to the passage space S for the inspection thereof and/or for maintenance operations relating to the feed means 40.

With reference to Figure 6, the discharge conduit 14 of the shredded material is connected to the shredding chamber 15 at the outlet section 15B with which it is in communication. As shown, preferably, the discharge conduit 14 comprises a first part 14A, connected to the shredding chamber 15, and a second part 14B connected, in an orientable manner, to the first part 14A. The second part 14B defines the discharge section 144 through which the shredded material is discharged into the environment. The second part 14B can therefore be oriented with respect to the first part 14A so as to direct the discharge of the shredded material laterally. In this regard, the second part 14B is preferably provided with a deflector element 145 to direct the discharge flow towards the ground.

With reference again to Figure 6, preferably, the chamber 15 is delimited by an openable portion 157 which allows access into the chamber itself to carry out inspection and maintenance operations on the shredding means 30. In the illustrated form, the openable portion 157 *(obtained in the rear and lower part of the chamber 15 between the two structural plates 155A, 155B)* is defined by a hinged structural component *(to one of the structural plates 155A, 155B or to another structural component)* so that it can rotate downwards between a closed position and an open position *(as indicated by the direction of the arrow F1)* so as to define access to the chamber 15.

In accordance with a preferred embodiment, visible in the figures, the mechanical transmission 35 which connects the thermal engine MT to the rotor 31 of the shredding means 30 is of the belt type. In particular, such transmission 35 includes an intermediate shaft 38 rotating about a rotation axis 203 substantially parallel to the rotation axis 205 of the output shaft of the thermal engine MT and to the rotation axis 201 of the rotor 31 of the shredding means 30.

The mechanical transmission 35 comprises a first belt 39A which connects the output shaft of the thermal engine MT to the intermediate shaft 38 and a second belt 39B which connects the same intermediate shaft 38 to the transmission element 351 connected to the rotor 31 of the shredding means 30. The first belt 39A therefore transfers the rotational motion from the output shaft of the thermal engine MT to the intermediate shaft 38, while the second belt 39B transfers the motion from the same intermediate shaft to the rotor 31 of the shredding means 30.

More precisely, a pulley 319 is keyed onto the shaft of the thermal engine MT and connected via the first belt 39A to an intermediate pulley 321 keyed onto the intermediate shaft 38. The second belt 39B instead connects another intermediate pulley 322 keyed onto the intermediate shaft 38 to the transmission element 231 rotating integrally with the rotor 31 of the shredding means 30. As shown in the figures, preferably the two intermediate pulleys 321, 322 are keyed at opposite ends of the intermediate shaft 38.

The intermediate shaft 38 is preferably supported between the two structural plates 155A, 155B in a position substantially below the feed means 40, below and outside the passage space S defined above. As visible from Figures 3 and 4, the two belts 39A, 39B are arranged on opposing sides of the frame 10, i.e., sides of the front plate 101 spaced transversely. In particular, from Figure 4 it can be observed that the first belt 39A is arranged at the front and on the right side of the shredder device 1 *(in particular mainly to the left of the thermal engine MT).* Instead, from Figure 3 it can be seen that the second belt 39B is arranged at the rear and on left side of the shredder device 1, in a position substantially adjacent to the left structural plate 155B indicated above.

As can be seen from Figure 3, preferably, with respect to the support plane PO of the shredder device 1, the intermediate shaft 38 is located at a height/position, evaluated along the normal direction U-D, comprised between that of the shaft of the thermal engine MT *(i.e., of the rotation axis 205 indicated in* *Figure 4**)* and that of the rotor 31 of the shredding means 30 *(i.e., of its rotation axis 201 also indicated in* *Figure 4**).*

In accordance with a preferred embodiment, the rotor of the alternator AE is mechanically connected to the intermediate shaft 38 of the mechanical transmission 35. Therefore, the rotation of the rotor of the alternator AE is obtained by exploiting the same mechanical transmission provided for the operation of the shredding means 30. In particular, the rotor of the alternator AE is preferably keyed onto the intermediate shaft 38 so as to be coaxial with the latter. Therefore, the stator of the alternator AE is also preferably supported between opposite portions of the two structural plates 155A, 155B as can be seen from Figures 3 and 4.

With reference to Figures 1, 2 and 7, preferably the shredder device 1 is provided with a plurality of protective casings C1, C2, C3, C4 installed, in a removable manner, on the device 1 each to protect one or more components during the use of the device itself. A first protective casing C1 and a second protective casing C2 are provided for the purpose of protecting the mechanical transmission 35 extending between the thermal engine MT and the shredding means 30. In particular, the first casing C1 is arranged on the right side, so as to protect the first transmission belt 39A, while the second casing C2 is arranged on the left side to protect the second transmission belt 39B. A third protective casing C3 is arranged on the right side to protect the drive module MA, while a fourth casing C4 on the left side has the function of protecting and allowing access to the alternator AE. In any case, removing one of the casings allows inspection and access to the components normally protected by the casing itself.

The present invention therefore allows to fulfil all the preset tasks and objects. In particular, due to its *"hybrid"* motorization, the shredder device according to the invention stands out for its limited energy consumption and low environmental impact. With respect to traditional devices, the shredder device according to the invention is particularly effective both in terms of shredding green material and in terms of movement on the ground. In this regard, the latter is achieved solely through electric drive means advantageously powered by at least two possible electrical power sources, benefiting operational versatility.

Naturally, a person skilled in the art may make modifications and variations to the shredder device described in detail above in order to satisfy specific and contingent application needs, modifications and variations which in any case fall within the scope of protection defined by the claims.

## Claims

1. Self-propelled shredder device (1) for shredding green waste material, wherein said shredder device (1) comprises:
- a frame (10) supporting a plurality of rotating movement members (8A, 8B) whose rotation causes the advancement on the ground of said device (1);
- drive means (16A, 16B) connected to said rotating members (8A, 8B) to rotate them;
- a shredding chamber (15) in which shredding means (30) of said waste material are housed;
- a loading hopper (13) for loading waste material to be shredded and a discharge conduit (14) for discharging shredded waste material, wherein said loading hopper (13) and said discharge conduit (14) are in communication with said shredding chamber (15);
- a thermal engine (MT) supported by said frame (10) and mechanically connected to said shredding means (30) for driving them;
**characterized in that** said drive means (16A, 16B) are of an electrical type.

2. Shredder device (1) according to claim 1, wherein said shredder device (1) comprises feed means (40) for conveying said waste material into said shredding chamber (15) and a drive module (MA) for operating said feed means, wherein said drive module (MA) is of an electrical type.

3. Shredder device (1) according to claim 1 or 2, wherein said shredder device (1) comprises a battery module (B) including one or more power batteries, wherein said battery module (B) is electrically connected to a power supply line (L1) of said drive means (16A, 16B).

4. Shredder device (1) according to claim 1 or 2, wherein said shredder device (1) comprises an electric alternator (AE) which includes a rotor (RO) and a stator (SO), wherein said rotor (RO) is mechanically connected to said thermal engine (MT) and wherein said stator (SO) is electrically connected to a power supply line (L1) of said drive means (16A, 16B).

5. Shredder device (1) according to claim 3, wherein said shredder device (1) comprises an electric alternator (AE) which includes a rotor (RO) and a stator (SO), wherein said rotor (RO) is mechanically connected to said thermal engine (MT) and wherein said stator (SO) is electrically connected to said power supply line (L1) of said drive means (16A, 16B).

6. Shredder device (1) according to any one of claims 3 to 5, when dependent on 2, wherein said drive module (MA) is powered by said power supply line (L1).

7. Shredder device (1) according to claim 5 or 6, wherein said battery module (B) and said stator (SO) of said alternator (AE) are connected in parallel to said power supply line (L1).

8. Shredder device (1) according to any one of claims 1 to 7, wherein said rotating members (8A, 8B) comprise two tracked units, each comprising a drive wheel (81), and wherein said drive means (16A, 16B) comprise a pair of electric engines each connected to a drive wheel of one of said tracked units.

9. Shredder device (1) according to any one of claims 3 to 8, wherein said frame (10) comprises a main plate (101) above which said thermal engine (MT) is installed, wherein said battery module (B) is installed below said main plate (101) in a position at least partially below said thermal engine (MT).

10. Shredder device (1) according to claim 9, wherein said frame (10) comprises a pair of opposing and spaced apart support sidewalls (101A, 101B) emerging above with respect to said main plate (101), wherein said shredding chamber (15) is installed and supported between said support sidewalls (101A, 101B) in a position close to said thermal engine (MT).

11. Shredder device (1) according to any one of claims 2 to 10, wherein said shredding chamber (15) comprises an inlet section (15A) and an outlet section (15B) respectively communicating with said loading hopper (13) and with said discharge conduit (13), wherein said shredding means (30) comprise a shredding rotor (31) including one or more cutting elements, wherein said shredding rotor (31) is arranged within said shredding chamber (15) in a position close to said inlet section (15A), said feed means (40) comprising a vane rotor (45) arranged outside said shredding chamber (15) in a position close to said inlet section (15A), wherein said vane rotor (45) and said shredding rotor (31) have relative rotation axes (201, 202) parallel to each other.

12. Shredder device (1) according to claim 11, wherein said shredding rotor (31) is connected to an output shaft of said thermal engine (MT) via a mechanical belt transmission (35) which includes:
- an intermediate shaft (38) whose rotation axis is parallel to the rotation axis of said shredding rotor (31) of said shredding means (30) and to the rotation axis of said output shaft of said thermal engine (MT);
- a first belt (39A) to transmit motion from said thermal engine (MT) to said intermediate shaft (38), and
- a second belt (39B) to transmit motion from said intermediate shaft (38) to said shredding rotor (31) of said shredding means (30),
wherein said first belt (39A) and said second belt (39B) are arranged on opposite sides of said frame (10).

13. Shredder device (1) according to claim 12, wherein said rotor (RO) is mechanically connected to, preferably keyed onto said intermediate shaft (38) of said mechanical transmission (35).

14. Shredder device (1) according to claim 11 or 12, wherein said shredding chamber (15) is transversely delimited by two opposing and spaced apart structural plates (155A, 155B), wherein said shredding rotor (31), said vane rotor (45) and/or said intermediate shaft (38) are supported between facing portions of said structural plates (155A, 155B).
